# EUROPÄISCHE PATENTSCHRIFT

(11) **EP 1 981 787 B1**
(45) Veröffentlichungstag und Bekanntmachung des Hinweises auf die Patenterteilung: **16.11.2016**
(21) Anmeldenummer: 06840953.1
(22) Anmeldetag: 05.12.2006
(51) Int. Cl.: B65G 37/02, G01N 23/04, G01V 5/00

(54) **KONTROLLSTATION ZUR ÜBERPRÜFUNG VON HANDGEPÄCK UND ANDEREN VON PERSONEN MITGEFÜHRTEN GEGENSTÄNDEN**
CONTROL STATION FOR CHECKING HAND LUGGAGE AND OTHER OBJECTS CARRIED BY PERSONS
STATION DE CONTROLE POUR CONTROLER LES BAGAGES À MAIN ET D'AUTRES OBJETS TRANSPORTÉS PAR DES PERSONNES

(30) Priorität: 09.02.2006 DE 102006006208
(43) Veröffentlichungstag der Anmeldung: 22.10.2008
(60) Teilanmeldung: 16171984.4
(73) Patentinhaber: Smiths Heimann GmbH, 65205 Wiesbaden (DE)
(72) Erfinder: HENKEL, Rainer, 55444 Schweppenhausen (DE); JENTSCH, Harald, 65510 Idstein (DE); THOMA, Helmut, 55131 Mainz (DE)
(74) Vertreter: Greif, Thomas
(86) Internationale Anmeldenummer: PCT/EP2006/011631
(87) Internationale Veröffentlichungsnummer: WO 2007/090450

(56) Entgegenhaltungen:
- EP-A- 1 714 916
- WO-A-01/05685
- WO-A2-2006/015381
- DE-U1- 20 007 970
- US-A1- 2003 128 806
- US-A1- 2003 221 931
- US-A1- 2005 193 648
- US-B1- 6 507 278

## Beschreibung

Die Erfindung betrifft eine Kontrollstation zur Überprüfung von Handgepäck und anderen von Personen mitgeführten Gegenständen mit einem Kontrollgerät, insbesondere einem Röntgenprüfgerät, einem sich durch das Kontrollgerät erstreckenden Förderer zum Fördern der Gegenstände durch das Kontrollgerät, einer vor dem Förderer angeordneten Auflagestelle und eine hinter dem Förderer angeordneten Entnahmestelle für die Gegenstände und mit auf den Förderer aufsetzbaren Transportwannen, in die kleine Gegenstände und Kleidungstücke gelegt und zur Überprüfung durch das Kontrollgerät gefördert werden.

Zur Sicherheitskontrolle von Handgepäck und anderen von Personen mitgeführten Gegenständen, z. B. zur Sicherheitskontrolle auf Flughäfen, werden bekannter Weise Kontrollstationen mit Röntgenprüfgeräten verwendet, von denen die mitgeführten Gegenstände durchstrahlt werden. Die zu prüfenden Gegenstände werden auf einem Förderer, üblicherweise einem Transportband, durch das Prüfgerät gefördert, das von einem Operator bedient wird. An der Eingangsseite ist vor dem Förderer eine Rollenbahn angeordnet, die zur Auflage der zu prüfenden Gegenstände dient. Analog ist an der Ausgangsseite im Anschluß an den Förderer eine Rollenbahn angeordnet, von der die geprüften Gegenstände entnommen werden können.

Zum Transport von kleinen Gegenständen (Geldbörsen, Mobiltelefonen, Laptops, kleine Rücksäcke, etc.) und Kleidungsstücken werden bekannter Weise Transportwannen verwendet, in die diese Gegenstände eingelegt werden. Genauso wie größere Gegenstände (Taschen etc.) werden die Transportwannen mit den darin befindlichen Gegenständen auf den Förderer aufgelegt und von diesem durch das Kontrollgerät gefördert. Nach der Kontrolle werden die Gegenstände an der Entnahmestelle aus den Wannen von den Passagieren entnommen. Nach dem Entleeren müssen die Transportwannen wieder an den Eingang der Kontrollstation zurückgebracht werden.

Dazu werden sie entweder durch Bedienungspersonal zurückgetragen oder werden an der Entnahmestelle angehoben und auf eine nicht angetriebene Rollenstrecke umgesetzt und auf dieser zurückgeschoben. Alle bekannten Verfahren sind unergonomisch und belasten das Bedienpersonal körperlich und zeitlich in erheblichem Maße.

Das Dokument US 2005/0193648 A1 offenbart eine Kontrollstation nach dem Oberbegriff des Anspruchs 1.

Der Erfindung liegt die Aufgabe zugrunde, eine Kontrollstation, bei der der Rücktransport der Wannen wenig Platz benötigt.

Diese Aufgabe wird durch die Kontrollstation nach Anspruch 1 gelöst.

Nach der Erfindung werden die Transportwannen automatisch vom Ende der Kontrollstrecke zum Anfang der Kontrollstrecke zurückgefördert. Die zeitliche und körperliche Belastung des Bedienungspersonals wird reduziert. Somit kann das Bedienungspersonal effizienter eingesetzt werden.

Die Anordnung und Gestaltung des Rückförderers für die Wannen ist dabei so gewählt, dass die Wannen mit minimalen körperlichen und zeitlichem Aufwand an der Entnahmestelle des Hauptförderers an den Rückförderer übergeben werden. Die Übergabe kann dabei entweder durch eine Servicekraft, beispielsweise die Bedienperson des Kontrollgeräts, durch den Passagier selbst oder automatisch erfolgen. Beim Rücktransport stehen die Wannen hochkant auf einem Förderer. Der Rücktransport der Wannen in hochkant stehender Position hat den Vorteil, dass ein sehr schmaler Förderer eingesetzt werden kann, der nur sehr wenig Platz benötigt. Der liegende Rücktransport ermöglicht es, den Rückförderer unterhalb des Förderers und des Kontrollgeräts anzuordnen.

Die Unteransprüche enthalten bevorzugte, für verschiedene Anwendungsfälle unter verschiedenen räumlichen Bedingungen vorgesehene Ausführungsformen der Erfindung.
- Figur 1: zeigt die Schrägansicht einer Kontrollstation mit einem unterhalb des Kontrollgeräts angeordneten Rückförderer für die Transportwannen.
- Figur 2: zeigt eine Draufsicht auf eine Ausführungsform, die nicht Teil der Erfindung ist, bei der die Wannen liegend neben dem Kontrollgerät zurückgefördert werden.
- Figur 3: zeigt eine Schrägansicht der Ausführungsform nach Figur 2.
- Figur 4: zeigt eine Ausführungsform, die nicht Teil der Erfindung ist, bei der die Wannen auf der Passagierseite liegend zurückgefördert werden.
- Figur 5: zeigt eine Ausführungsform, bei der die Wannen hochkant stehend auf der Operatorseite zurückgefördert werden.
- Figur 6: zeigt eine Schrägansicht der Ausführungsform nach Figur 5.
- Figur 7: zeigt eine Ausführungsform, bei der die Wannen hochkant stehend auf der Passagierseite zurückgefördert werden.

Die Figuren 8 - 11 zeigen drei verschiedene Möglichkeiten, die Wanne für einen hochkant stehenden Rücktransport von der liegenden in eine stehende Position zu bringen, wobei

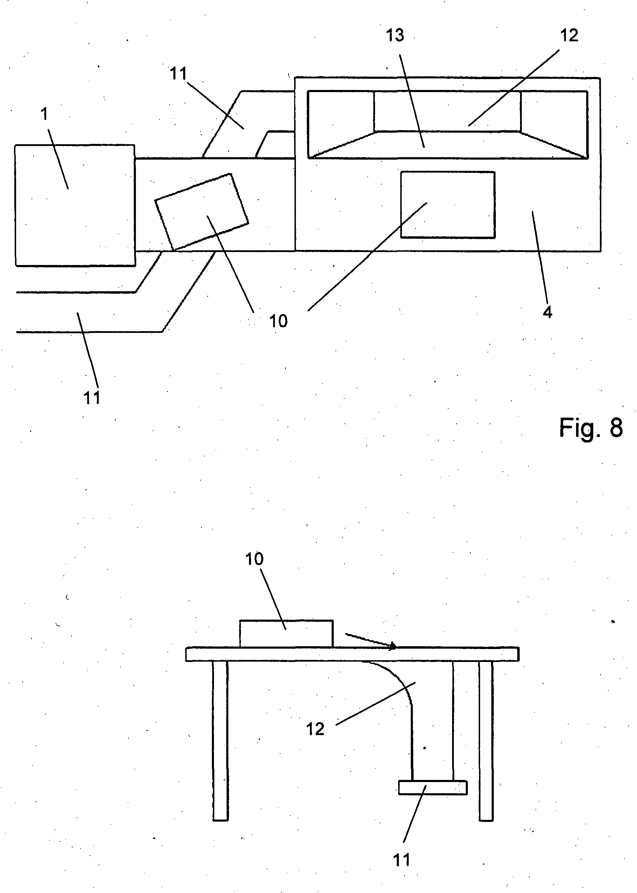

Figur 8 und 9 einen schräg nach unten verlaufenden Schacht für die Wannen zeigt,

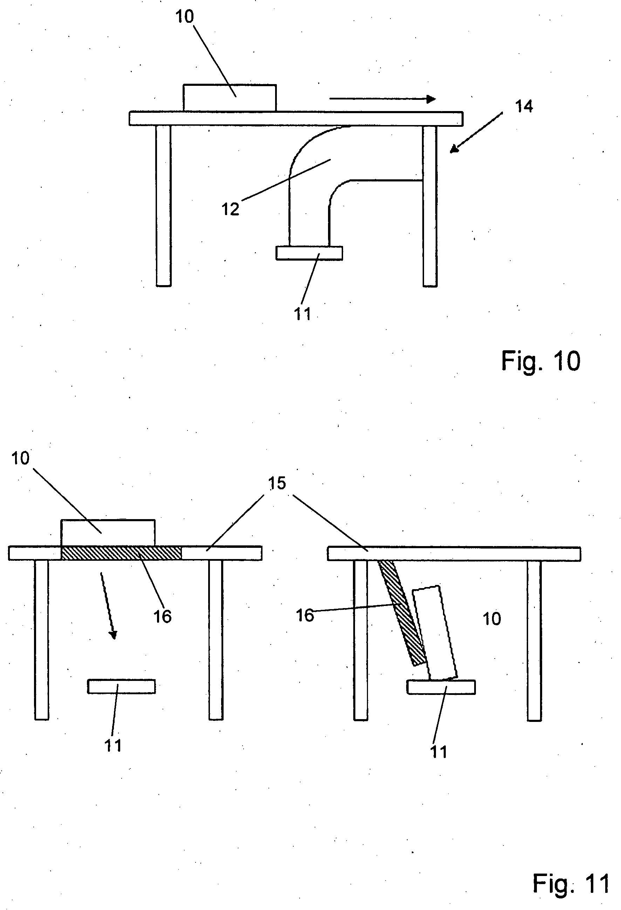

Figur 10 einen um 90° gekrümmt verlaufenden, manuell zu beschickenden Schacht, und

Figur 11 einen Tisch mit einer nach unten öffnenbaren Klappe, auf der die Wannen auf den Rückförderer gleiten.

Alle in den Figuren dargestellten Kontrollstationen dienen zur Überprüfung von Handgepäck und anderen von Personen mitgeführten Gegenständen. Sie werden bevorzugt zur Sicherheitskontrolle auf Flughäfen eingesetzt, um die von Passagieren mitgeführten Gegenstände auf Waffen, Explosivstoffe oder andere unzulässige Gegenstände zu kontrollieren. Jede Kontrollstation enthält ein Kontrollgerät 1, bevorzugt ein Röntgenprüfgerät, mit dem die mitgeführten Gegenstände durchstrahlt werden.

Die zu prüfenden Gegenstände werden auf einem Förderer 2, bevorzugt ein Bandförderer, durch das Kontrollgerät gefördert. An der Eingangsseite der Kontrollstation ist vor dem Förderer 2 eine Auflage 3 angeordnet, auf der die zu prüfenden Gegenstände aufgelegt und dem Förderer 2 zugeführt werden. Üblicherweise besteht die Auflagestelle 3 aus einer Rollenstrecke mit frei drehbaren Rollen. An der Ausgangsseite schließt sich an den Förderer 2 eine Entnahmestelle 4 an, an der die geprüften Gegenstände von dem Passagier entnommen werden. Auch die Entnahmestelle 4 besteht üblicherweise aus einer Rollenstrecke mit frei drehbaren Rollen, der die geprüften Gegenstände aus dem Kontrollgerät 1 von dem Förderer 2 zugefördert werden. Auf bekannte Weise ist neben der Entnahmestelle 4 eine Nachkontrollstelle 5 angeordnet, der die Gegenstände von einem alternativen Förderer 6 hinter dem Kontrollgerät zugefördert werden, falls die Überprüfung durch das Kontrollgerät 1 nicht eindeutig ist, so dass eine manuelle Nachprüfung im Beisein einer Bedienperson erforderlich ist.

Neben dem Kontrollgerät 1 befinden sich an der Operatorseite O der Bedienplatz für die Bedienperson, der einen Bildschirm enthält, auf dem das Ergebnis der Durchleuchtung angezeigt wird. Die Nachkontrollstelle 5 befindet sich ebenfalls an der Operatorseite, damit sie von der Bedienperson für eine Nachkontrolle schnell erreicht werden kann. Eine von der Bedienperson oder automatisch auslösbare Weiche 7 in der Förderstrecke 2 ermöglicht es, auf die Förderstrecke 6 umzuschalten, so dass die Gegenstände nicht der Entnahmestelle 4, sondern der Nachkontrollstelle 5 zugefördert werden.

Die Passagiere bewegen sich an der zur Operatorseite O entgegen gesetzten Seite P durch die Kontrollstation. Daher befindet sich die Gepäckentnahme 4 auf der Passagierseite P.

Zum Transport von kleinen Gegenständen (Geldbörsen, Mobiltelefonen, Laptops, kleine Rucksäcke, etc.) und Kleidungsstücken durch das Kontrollgerät 1 werden Transportwannen 10 verwendet, in die diese Gegenstände und die Kleidungsstücke eingelegt werden. Die Transportwannen 10 werden auf die Rollen der Auflegestelle 3 aufgesetzt, wo die Passagiere die kleinen Gegenstände und die Kleidungsstücke in die Wannen 10 einlegen. Nach der Überprüfung im Kontrollgerät 1 werden an der Entnahmestelle 4 von den Passagieren die geprüften Gegenstände wieder aus den Wannen 10 entnommen.

Allen Ausführungsformen nach der Erfindung ist gemeinsam, das neben oder unterhalb des durch das Kontrollgerät 1 führenden Förderers 2 ein Rückförderer 11 für die leeren Transportwannen 10 angeordnet ist, der von der Entnahmestelle 4 zumindest bis in den Bereich der Auflagestelle 3 vor dem Förderer 2 reicht. Von dem Rückförderer 11 werden die Transportwannen 10 automatisch vom Ende der Kontrollstrecke zum Anfang der Kontrollstrecke zurückgefördert. Es ist nicht erforderlich, dass eine Bedienperson die Transportwannen 11 zurückträgt oder manuell auf einer Rollenstrecke zurückschiebt. Die zeitliche und körperliche Belastung des Bedienungspersonals wird somit erheblich reduziert.

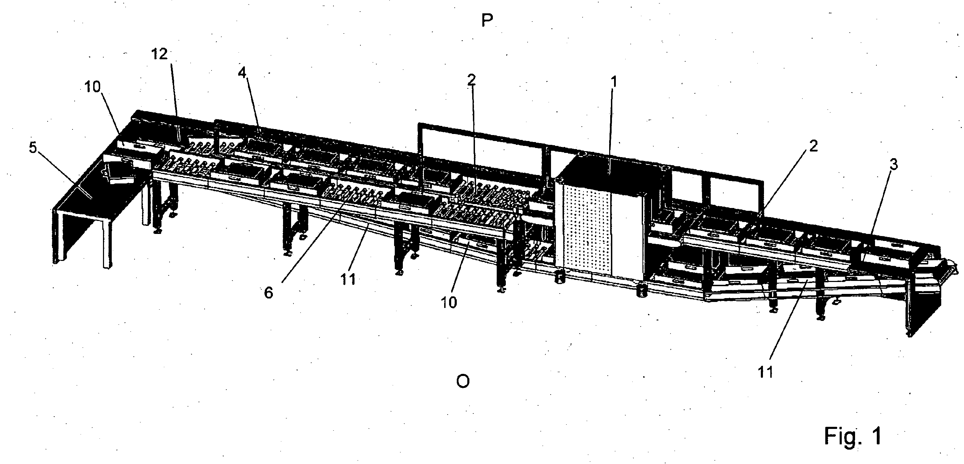

In Figur 1 ist eine Ausführungsform, die nicht Teil der Erfindung ist, dargestellt, bei der der Rückförderer 11 unterhalb des Förderers 2 und des Kontrollgeräts 1 verlaufend angeordnet ist. Der Rückförderer 11 enthält angetriebene Bänder oder Rollen und weist eine Transportbreite auf, die zumindest der Breite der Transportwannen 11 entspricht. Die Transportwannen 11 können so liegend zurücktransportiert werden, um die erforderliche Höhe unterhalb des Kontrollgeräts 1 und des Förderers 2 möglichst gering zu halten. Die Übergabestelle 12 am Ende der Kontrollstrecke, an der die geleerten Wannen 10 von dem Förderer 2 an den Rückförderer 11 übergeben werden, enthält entweder frei drehbare oder angetriebene Rollen. Bei frei drehbaren Rollen an der Übergabestelle 12 schiebt entweder eine Bedienperson oder der Passagier die leeren Wannen 10 auf den Rückförderer 11. Bei angetriebenen Rollen an der Übergabestelle 12 kann die Übergabe automatisch, beispielsweise durch eine Bedienperson ausgelöst, erfolgen. Die Übergabe der leeren Transportwannen 10 von dem Rückförderer 11 auf die Auflagestelle 3 zu Beginn der Kontrollstelle erfolgt ebenfalls entweder manuell durch eine Bedienungsperson oder den Passagier selbst, oder an dieser Stelle sind entsprechende, von einer Bedienungsperson aktivierbare Fördermittel angeordnet.

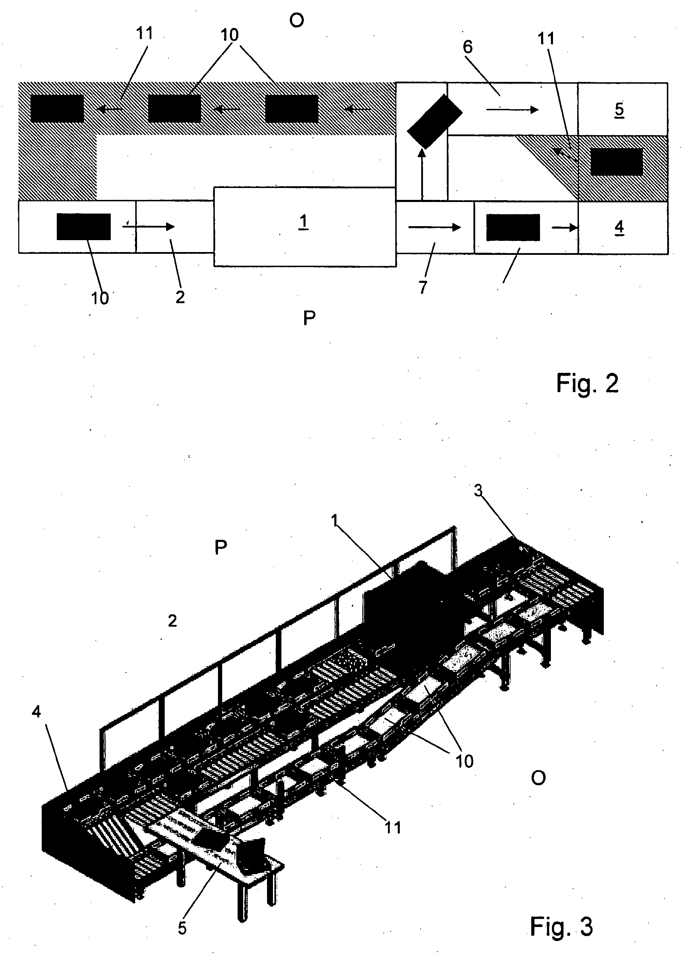

In den Figuren 2 und 3 ist eine andere Ausführungsform, die nicht Teil der Erfindung ist, dargestellt, bei der der Rückförderer 11 für die Wannen 10 neben dem Förderer 2 auf der Operatorseite O verlaufend angeordnet ist. In den beiden Figuren 2 und 3 sind auch die Nachkontrollstelle 5 und die Weiche 7 mit dem zur Nachkontrolistelle 5 führenden Förderer 6 dargestellt. Auch bei dieser Ausführungsform werden die Wannen 10 liegend zurückgefördert. Der Rückförderer 11 beginnt zwischen der Entnahmestelle 4 und der Nachkontrollstelle 5 und verläuft zu Beginn in einer Ebene tiefer als die Förderer 2 und 6. Diese tiefere Ebene ist in den Figuren schraffiert gezeichnet. Zwischen der Entnahmestelle 4 und der Nachkontrolle 5 ist eine schräg nach unten zu dem Rückförderer 11 führende Förderfläche angeordnet, auf der die Transportwannen 10 nach unten auf den Rückförderer 11 rutschen. Der Rückförderer 11 verläuft auf der Operatorseite bis neben die Auflagestelle 3. Auf seiner letzten Förderstrecke steigt er bis in die Höhe der Auflagestelle 3 an, so dass eine Wanne 10 einfach von dem Ende des Rückförderers 11 auf die Auflagestelle 3 geschoben werden kann.

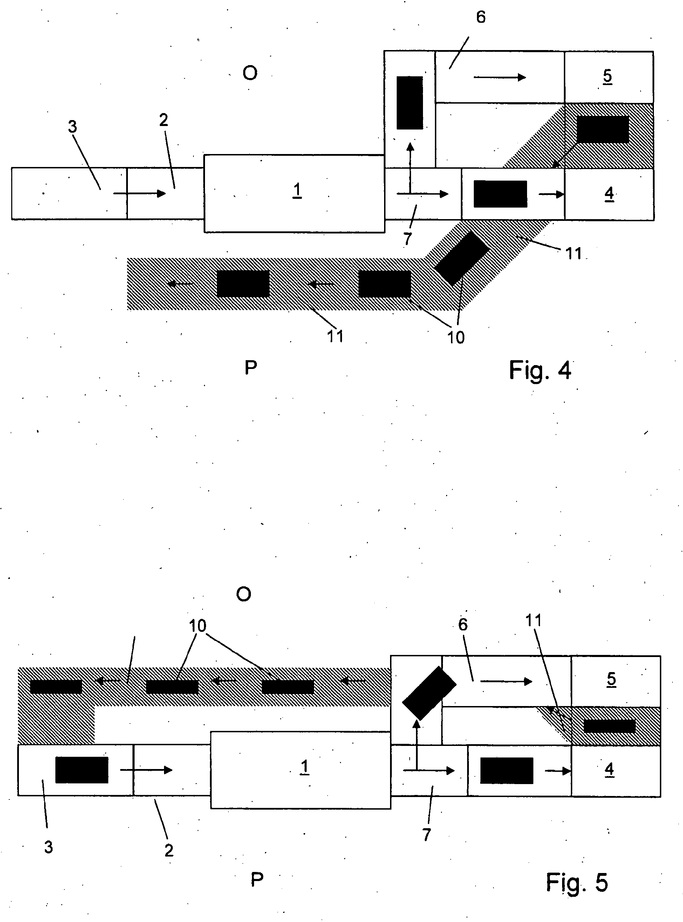

In Figur 4 ist eine weitere Ausführungsform, die nicht Teil der Erfindung ist, dargestellt, bei der die Wannen 10 auf dem Rückförderer 11 liegend zurücktransportiert werden. Der Aufbau dieser Kontrollstation entspricht der in den Figuren 2 und 3 dargestellten Kontrollstation mit dem Unterschied, dass der Rückförderer 11 für die Wannen 10 auf der Passagierseite P neben dem Förderer 2 verlaufend angeordnet ist. Auch bei dieser Ausführungsform beginnt der Rückförderer zwischen der Entnahmestelle 4 und der Nachkontrollstelle 5 unterhalb der beiden zu diesen Stellen fördernden Förderer 2, 6. Der Rückförderer 11 verläuft zunächst schräg unterhalb des Förderers 2 nach außen auf die Passagierseite P und wird anschließend parallel zum Förderer 2 an dem Kontrollgerät 1 vorbei bis neben die Auflagestelle 3 am Eingang der Kontrollstation geführt.

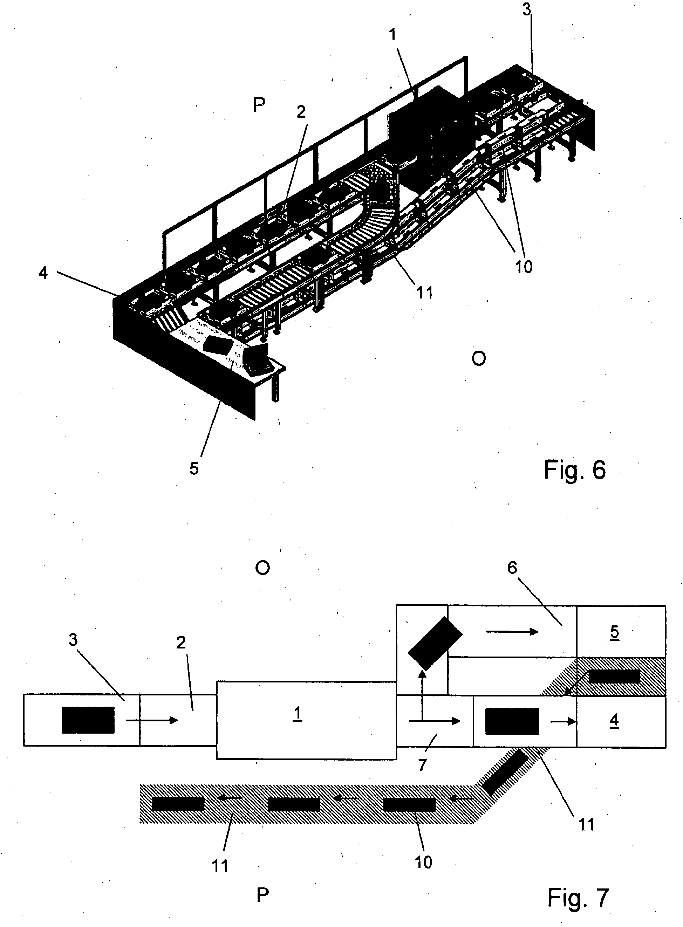

Die Figuren 5 - 7 zeigen Ausführungsformen der Erfindung. Die Wannen 10 werden auf dem Rückförderer 11 hochkant stehend zurückgefördert. Dies hat den Vorteil, dass sehr schmale Förderer 11 (Bandförderer oder Rollenförderer) eingesetzt werden können, die nur sehr wenig Platz benötigen. Der Rückförderer 11 verläuft dabei neben dem durch das Kontrollgerät 1 führenden Förderer 2. Er ist entweder an der Operatorseite 0 (Figur 5, Figur 6) oder an der Passagierseite. P angeordnet (Figur 7). Der Aufbau der jeweiligen Kontrollstation entspricht im Wesentlichen den Ausführungsformen mit liegendem Rücktransport, die in den Figuren 1 - 4 beschrieben sind. Übereinstimmende Teile sind daher auch mit übereinstimmenden Bezugsnummern bezeichnet. Die Ausführüngsformen mit Rücktransport der Wannen 10 in hochkant stehender Position weisen zusätzlich am Beginn der Rückförderstrecke Mittel auf, die entweder auf der Entnahmestelle 4 oder auf der Nachkontrollstelle 5 liegenden Wannen 10 aufzurichten und auf dem Rückförderer 11 in eine hochkant stehende Position zu bringen. Verschiedene dieser Mittel sind in den Figuren 8 - 11 dargestellt.

Bei der Ausführungsform nach Figur 8 und 9 führt ein Schacht 12 von der Entnahmestelle 4 nach unten zu dem schmalen Rückförderer 11. Innerhalb des Schachtes 12 führt eine schräge Leitfläche 13 nach unten, die so gestaltet ist, dass eine nach unten rutschende Wanne 10 sich hochkant aufrichtet und sich so auf den Rückförderer 11 stellt. Die Wannen 10 werden entweder von einer Bedienperson oder dem Passagier selbst auf der Entnahmestelle 4 in den Schacht 12 geschoben, nach dem geprüft wurde, dass sich kein Gegenstand mehr in der Wanne 10 befindet. Alternativ ist es möglich, einen motorischen Antrieb vorzusehen, der eine Wanne 10 in den Schacht 12 befördert. Ein spiegelbildlich aufgebauter Schacht ist auch an der Nachkontrollstelle 5 angeordnet, um dort befindliche leere Wannen 10 auf den Rückförderer 11 zu bewegen.

In Figur 10 ist eine Ausführungsform dargestellt, die ebenfalls einen um 90° gekrümmten Schacht 12 aufweist, dessen Eintrittsöffnung sich an der Operatorseite O zwischen der Entnahmestelle 4 und der Nachkontrollstelle 5 befindet. Die Eintrittsöffnung 14 des Schachts 12 befindet sich seitlich unterhalb der Auflagefläche der Entnahmestelle 4 oder der Nachkontrollstelle 5. Eine leere Wanne 10 wird von einer Bedienperson herangezogen und durch die Eintrittsöffnung 14 in den Schacht 12 gesteckt. Bei der Bewegung durch den Schacht 12 wird die Wanne 10 aufgerichtet und steht so hochkant auf dem Rückförderer 11.

Bei der Ausführungsform nach Figur 11 ist in einer Auflagefläche 15, die zwischen der Entnahmestelle 4 und der Nachkontrollstelle 5 in gleicher Höhe mit diesen angeordnet ist, eine nach unten schwenkbare Klappe 16 angeordnet. Die Klappe 16 ist so nach unten klappbar, dass eine Wanne 10 auf ihr nach unten auf den Rückförderer 11 rutscht und sich dabei hochkant stellt. Der Schwenkmechanismus für die Klappe 16 wird von einer Bedienperson betätigt, wenn diese festgestellt hat, dass die Wanne 10 vollständig entleert ist.

## Patentansprüche

1. Kontrollstation zur Überprüfung von Handgepäck und anderen von Personen mitgeführten Gegenständen mit einem Kontrollgerät (1), insbesondere einem Röntgenprüfgerät, einem sich durch das Kontrollgerät (1) erstreckenden Förderer (2) zum Fördern der Gegenstände durch das Kontrollgerät (1), einer vor dem Förderer (2) angeordneten Auflagestelle (3) und eine hinter dem Förderer (2) angeordneten Entnahmestelle (4) für die Gegenstände und mit auf den Förderer (2) aufsetzbaren Transportwannen (10), in die kleine Gegenstände und/oder Kleidungstücke gelegt und zur Überprüfung durch das Kontrollgerät (1) gefördert werden, wobei neben oder unterhalb des durch das Kontrollgerät (1) führenden Förderers (2) ein Rückförderer (11) für die Transportwannen (10) angeordnet ist, der von der Entnahmestelle (4) des Förderers (2) bis in den Bereich der Auflagestelle (3) vor dem Förderer (2) reicht, **dadurch gekennzeichnet, dass** der Rückförderer (11) geeignet ist, die Wannen (10) auf ihm hochkant stehend zurück zu fördern und wobei weiterhin am Beginn der Rückförderstrecke Mittet angeordnet sind, um die liegenden Wannen (10) auf dem Rückförderer (11) in eine hochkant stehende Position zu bringen.

2. Kontrollstation nach Anspruch 1, **dadurch gekennzeichnet, dass** der Rückförderer (11) unterhalb des Förderers (2) und des Kontrollgeräts (1) verlaufend angeordnet ist.

3. Kontrollstation nach Anspruch 1, **dadurch gekennzeichnet, dass** der Rückförderer (11) neben dem Förderer (2) auf der Operatorseite (O) verlaufend angeordnet ist.

4. Kontrollstation nach Anspruch 1, **dadurch gekennzeichnet, dass** der Rückförderer (11) auf der Passagierseite (P) neben dem Förderer (2) verlaufend angeordnet ist.

5. Kontrollstation nach einem der Ansprüche 1 bis 4, **dadurch gekennzeichnet, dass** neben der Entnahmestelle (4) eine Nachkontrollstation (5) angeordnet ist, die durch eine automatisch oder manuell auslösbare Weiche (7) in dem Förderer (2) ansteuerbar ist.

## Claims

1. Control station for checking hand luggage and other objects carried by persons, having a control unit (1), in particular an X-ray checking unit, a conveyor (2), which extends through the control unit (1), for conveying the objects through the control unit (1), a depositing point (3), which is arranged ahead of the conveyor (2), and a retrieval point (4), which is arranged behind the conveyor (2), for the objects, and having transport bins (10), which can be placed onto the conveyor (2) and into which small objects and/or items of clothing are placed and conveyed through the control unit (1) for checking, wherein a return conveyor (11) for the transport bins (10) is arranged next to or below the conveyor (2) passing through the control unit (1) and reaches from the retrieval point (4) of the conveyor (2) into the region of the depositing point (3) ahead of the conveyor (2), **characterized in that** the return conveyor (11) is suitable for conveying back the bins (10) standing upright on it and means for bringing the lying bins (10) into an upright position on the return conveyor (11) are also arranged at the beginning of the return conveying section.

2. Control station according to Claim 1, **characterized in that** the return conveyor (11) is arranged running below the conveyor (2) and the control unit (1).

3. Control station according to Claim 1, **characterized in that** the return conveyor (11) is arranged running next to the conveyor (2) on the operator side (0).

4. Control station according to Claim 1, **characterized in that** the return conveyor (11) is arranged running next to the conveyor (2) on the passenger side (P).

5. Control station according to one of Claims 1 to 4, **characterized in that** arranged next to the retrieval point (4) is a follow-up control station (5), which can be actuated by an automatically or manually activatable switch point (7) in the conveyor (2).

## Revendications

1. Poste de contrôle destiné à vérifier des bagages à main et d'autres objets emportés par des personnes, avec un appareil de contrôle (1), notamment un appareil à rayons X, un convoyeur (2) s'étendant à travers l'appareil de contrôle (1), destiné à convoyer les objets à travers l'appareil de contrôle (1), une place de dépose (3) placée à l'avant du convoyeur (2) et une place de retrait (4) placée à l'arrière du convoyeur (2) pour les objets et avec des bacs de transport (10) susceptibles d'être posés sur le convoyeur (2), dans lesquels des petits objets et/ou des vêtements sont déposés et convoyés à travers l'appareil de contrôle (1) pour leur vérification, à côté et ou sous le convoyeur (2) conduisant à travers l'appareil de contrôle (1) étant placé un convoyeur de retour (11) pour les bacs de transport (10) qui mène de la place de retrait (4) du convoyeur (2) jusque dans la zone de la place de dépose (3) à l'avant du convoyeur (2), **caractérisé en ce que** le convoyeur de retour (11) est apte à convoyer en retour les bacs (10) placés debout sur l'arête sur celui-ci et par ailleurs au début du trajet de convoyage en retour étant placés des moyens pour amener les bacs (10) couchés sur le convoyeur de retour (11) dans une position debout sur l'arête.

2. Poste de contrôle selon la revendication 1, **caractérisé en ce que** le convoyeur de retour (11) est placé en s'écoulant en-dessous du convoyeur (2) et de l'appareil de contrôle (1).

3. Poste de contrôle selon la revendication 1, **caractérisé en ce que** le convoyeur de retour (11) est placé en s'écoulant à côté du convoyeur (2), du côté opérateur (0).

4. Poste de contrôle selon la revendication 1, **caractérisé en ce que** le convoyeur de retour (11) est placé en s'écoulant du côté passager (P), à côté du convoyeur (2).

5. Poste de contrôle selon l'une quelconque des revendications 1 à 4, **caractérisé en ce qu'**à côté de la place de retrait (4) est placé un poste de post-contrôle (5) qui est susceptible d'être actionné par un aiguillage (7) automatiquement ou manuellement déclenchable dans le convoyeur (2).
